# EUROPÄISCHE PATENTANMELDUNG

(11) **EP 2 735 777 A1**
(43) Veröffentlichungstag der Anmeldung: **28.05.2014**
(21) Anmeldenummer: 12194215.5
(22) Anmeldetag: 26.11.2012
(51) Int. Cl.: F16J 15/34, F16J 15/44

(54) **Gas-Lager, Anordnung und Turbomaschine**

(71) Anmelder: Siemens Aktiengesellschaft, 80333 München (DE)
(72) Erfinder: Blekkenhorst, Henk, 7671 WR Vriezenveen (NL); Kirchner, Christian, 47441 Moers (DE); De Bruyn, 7622 DA Borne (NL)

(57) **Zusammenfassung**

Die Erfindung betrifft ein Gas-Dichtung (GB) zur Lagerung eines sich entlang einer Achse (X) erstreckenden Rotors (R) an mindestens einer Lagerstelle (SL) umfassend mindestens eine stehende Dichtungsfläche (SBS), mindestens einen stehenden Gleitkörper (SB), der zumindest teilweise aus einem porösen Körper (PB) besteht, der aus einem Material von offener Porösität besteht, wobei die stehende Dichtungsfläche (SBS) an dem stehenden Gleitkörper (SB) derart ausgebildet ist, dass ein rotierender Gleitkörper (RB) relativ zu dem stehenden Gleitkörper (SB) bewegt werden kann und eine Lagerkraft (BF) mittels einer rotierenden Gleitfläche (RBS) an dem rotierenden Gleitkörper (RB) auf die stehende Gleitfläche (SBS) übertragen werden kann, weiterhin umfassend mindestens eine Modul-Gaszuführung (BGS), welche derart ausgebildet ist, dass Modul-Gas (BG) in den stehenden Gleitkörper (SB) einblasbar ist und zumindest teilweise an der stehenden Dichtungsfläche (SBS) aus dem stehenden Gleitkörper (SB) austritt, derart, dass sich ein Modul-Gasfilm (BGF) über zumindest einen Teil der stehenden Dichtungsfläche (SBS) im Betrieb des Lagers ausbildet.

## Beschreibung

Die Erfindung betrifft eine Gas-Dichtung, zur Wellen-Abdichtung eines sich entlang einer Achse erstreckenden Rotors an mindestens einer Dichtungsstelle umfassend
- mindestens eine stehende Dichtungsfläche,
- mindestens einen stehenden Dichtungskörper.

Eine Gasdichtung der eingangs genannten Art ist im Wesentlichen in vielen herkömmlichen Turbomaschinen umgesetzt. Viele dieser Dichtungen, insbesondere Trockengasdichtungen benötigen besonders aufbereitetes Dichtungsgas - in der Terminologie der Erfindung Modulgas.

Ausgehend von bekannten Dichtungen mittels Sperrgas hat es sich die Erfindung zur Aufgabe gemacht, diese Dichtungen derart weiterzubilden, dass sich eine weitgehende Vereinfachung bei der Umsetzung in Systemen ergibt. Diese Systeme sind beispielsweise Turbomaschinen, insbesondere Verdichter oder Expander, hier insbesondere Turbinen, wie Dampfturbinen oder Gasturbinen.

Weiterhin setzt sich die Erfindung mit der Lösung von Lagerungsproblemen bei Turbomaschinen auseinander.

Gas-Lager mit einem porösen Körper als Gleitkörper sind bereits aus dem Patent US 7,908,995 B2 bekannt und haben den Vorteil, dass die Ausbildung eines aerodynamischen Schmierfilms - wie vergleichsweise bei ölgeschmierten Gleitlagern sich ein hydrodynamischer Schmierfilm ausbildet - nicht zwingend erforderlich ist. Für den beschädigungsfreien Betrieb des Lagers. Es ist bekannt, dass sich hydrodynamische oder aerodynamische Schmierfilme erst bei einer gewissen Relativgeschwindigkeit zwischen der stehenden Lageroberfläche und der bewegten Lageroberfläche ausbilden. Unter dieser Relativgeschwindigkeit, welche bei der Lagerung von Rotoren mit bestimmten Wellenzapfendurchmessern einer bestimmten Drehzahl entspricht, tritt sog. Mischreibung ein, bei der ein erhöhter Verschleiß der Lageroberflächen unvermeidbar ist. Dementsprechend ist es erforderlich, den Mischreibungszustand zu vermeiden. Im Fall von Öllagern wird dies häufig mittels sog. "Anhebeöls" getan, welches in ausgefräste Taschen der Gleitlagerschale unter hohem Druck gegeben wird, so dass der Rotor mit seinem Lagerzapfen von dem Öldruck unter Ausbildung eines Schmierfilms aufschwimmt.

Bei herkömmlichen Gas-Lagern ohne den oben definierten porösen Körper besteht ein Problem erhöhten Verschleißes bei niedrigen Relativgeschwindigkeiten zwischen dem bewegten und dem stehenden Lagerkörper. Regelmäßig sind zur Verschleißminimierung bei diesen herkömmlichen Lagertypen Hilfslager oder sog. Fanglager eingesetzt, die bei unzureichender Drehzahl die fluidgeschmierten Gleitlager unterstützen oder vollständig ersetzen. Diese Hilfslager können beispielsweise als Kugellager oder ebenfalls als Gleitlager ausgebildet sein.

Ausgehend von bekannten Lagern hat es sich die Erfindung zur Aufgabe gemacht, diese Lager derart weiterzubilden, dass eine besondere Eignung für die Anwendung bei Systemen mit einem Differenzdruck gegeben ist. Diese Systeme sind beispielsweise Turbomaschinen, insbesondere Verdichter oder Expander, hier insbesondere Turbinen, wie Dampfturbinen oder Gasturbinen.

Zur Lösung der Aufgabe wird erfindungsgemäß ein Gas-Lager der eingangs genannten Art vorgeschlagen mit den zusätzlichen Merkmalen des kennzeichnenden Teils des Anspruchs 2. Jeweils rückbezogene Unteransprüche beinhalten vorteilhafte Weiterbildungen der Erfindung.

Ein Vorteil, der sich aus der Weiterbildung der Erfindung ergibt, ist die Kombination der Funktionen Lagerung und Dichtung in einem einzigen Bauteil. Vergleichbar mit der Zuführung von Sperrgas bei beispielsweise Anordnungen mit labyrinthartigen Wellendichtungen oder Trockengasdichtungen ermöglicht die Erfindung eine Kombination der Lagerung mit der Dichtung, wobei die Dichtung in Folge der Möglichkeit besonders enge Spalte zu realisieren eine äußerst niedrige Leckage aufweist. Die Berührungslosigkeit der Dichtung in allen Drehzahlbereichen bedingt einen nahezu verschleißfreien Betrieb des erfindungsgemäßen Gas-Lagers mit minimalem Wartungsaufwand. Verglichen mit einer Öllagerung ist die Handhabung von Modul-Gas besonders einfach, da bevorzugt gereinigte Luft verwendet werden kann, die in einem offenen System noch nicht mal gekühlt werden muss. Statt Luft kann auch ein anderes Gas verwendet werden, welches je nach Prozessgegebenheiten passend ist. Beispielsweise kann bevorzugt ein gereinigtes Inertgas (ein sich hinsichtlich des Prozesses weitestgehend inert verhaltendes Gas - häufig kann Stickstoff verwendet werden) verwendet werden. Darüber hinaus sind die Anforderungen an die Qualität des Modul-Gases, verglichen mit Trockengasdichtungen, sehr viel niedriger, so dass der Aufwand der Aufbereitung des Gases geringer ausfällt. Neben einer Reduzierung der Investitionskosten erhöht sich damit gleichzeitig die Verfügbarkeit der Maschine. Ein weitere Vorteil liegt in der nur geringen räumlichen Ausdehnung der kombinierten Lagerungsdichtung nach der Erfindung, so dass beispielsweise Turbomaschinen mit vergleichbarer Leistung gemäß der Erfindung kleiner ausgebildet werden können, so dass sich die Gesamtkosten stark reduzieren und beispielsweise die Gestaltung der Rotordynamik in Folge der verringerten Rotorlänge sich einfacher gestaltet.

Als Material für den stehenden Gleitkörper ist ein Material von offener Porösität zu verwenden, wobei vorteilhaft die Porösität (1 - Quotient aus Rohdichte und Reindichte) mindesten 10% beträgt. Der poröse Körper kann beispielsweise aus Graphit hergestellt werden.

Der Differenzdruck zwischen der Umgebungsfluidseite und der Prozessfluidseite beträgt im regulären Betrieb wenigstens 1 bar und ist bevorzugt größer als 10 bar.

Zweckmäßig kann sich die stehende Dichtungsfläche parallel zur Achse des zu lagernden Rotors erstrecken. Auf diese Weise sind auch radiale Kräfte von der stehenden Dichtungsfläche abstützbar im Sinne eines Radiallagers. Damit es zu dem gewünschten Dichteffekt kommt, ist es sinnvoll, wenn der poröse Körper oder mehrere poröse Körper aneinandergereiht den Rotor in einem Axialbereich vollständig umgegeben. Der poröse Körper kann hierbei insbesondere im Interesse der flexiblen Montage in Umfangsrichtung segmentiert ausgebildet sein und unter Minimierung von Lücken in Umgebungsrichtung aneinandergereiht montiert werden. Zweckmäßig sind die einzelnen Segmente des porösen Körpers federnd in einer stehenden Halterung gelagert, so dass sich ein dynamischer Lagerungs- und Dichtspalt zwischen der Dichtungsfläche des Rotors und der stehenden Dichtungsfläche ausbildet. Die Größe des Dichtspaltes wird unter anderem durch die Geometrie, die Lagerlast, den Druck des Modul-Gases beeinflusst.

Entsprechend kann das erfindungsgemäße Gas-Lager auch als Radial ausgerichtete Dichtung und ggf. zusätzlich als Axiallager ausgebildet sein, bei dem sich die stehende Dichtungsfläche im Wesentlichen senkrecht zu der Achse des Rotors erstreckt. Da diese Ausbildung keine Segmentierung der Dichtfläche erfordert, ist die Dichtigkeit besonders einfach herzustellen, insbesondere deswegen, weil bei einer nachgiebigen Dichtfläche diese in der Größe konstant bleiben kann.

Gleichfalls ist es denkbar, dass die stehende Dichtungsfläche schräg zu der Achse des Rotors ausgebildet ist und sich auf diese Weise eine im Wesentlichen konische stehende Dichtungsfläche ergibt. Auf diese Weise kann die erfindungsgemäße Gas-dichtung bzw. das erfindungsgemäße Gaslager sowohl axiale als auch radiale Kräfte aufnehmen.

Der poröse Körper kann in der stehenden Halterung bevorzugt elastisch gelagert sein, wobei entweder ein elastisches Element - beispielsweise eine Feder - oder der Druck des Modul-Gases den porösen Körper elastisch lagern bzw. für eine Vorspannung der stehenden Gleitfläche gegen die rotierende Gleitfläche sorgen. Das in den Figuren teilweise dargestellt elastische Element ist als optional zu verstehen bzw. die Steifigkeit kann derart variieren, dass das elastische Element auch als starrer Körper angesehen werden kann.

Eine vorteilhafte Weiterbildung sieht vor, dass der Gleitkörper einen Trägerkörper aufweist, der direkt an dem porösen Körper anliegt und die Dichtungskraft sowie ggf. die Lagerkraft aus dem Gleitkörper aufnimmt. Der Trägerkörper kann hierbei vorteilhaft etwaige statische Unzulänglichkeiten des porösen Körpers ausgleichen und diesen stabilisieren. Der Trägerkörper ist hierbei vorteilhaft in direkter Anlage mit dem porösen Körper ausgebildet und in einer weiteren vorteilhaften Weiterbildung an diesem befestigt verbunden durch Kraftschluss und/oder Formschluss und/oder Stoffschluss. Der Trägerkörper kann hierbei mit einer Ausnehmung für den porösen Körper versehen sein und diesen auf diese Weise nicht nur teilweise formschlüssig aufnehmen, sondern auch einen unbeabsichtigten seitlichen Austritt des Modul-Gases aus dem porösen Körper abdichtend verhindern. Seitlich meint hierbei einen Austritt des Modul-Gases nicht in Richtung des rotierenden Gleitkörpers bzw. nicht aus der stehenden Dichtfläche heraus.

Zweckmäßig kann zusätzlich oder alternativ der poröse Körper teilweise mit einer Versiegelung der äußeren Oberfläche versehen sein, welche die Durchlässigkeit für das Modul-Gas vermindert. Die Versiegelung ist hierbei auch bevorzugt an Stellen angebracht, die nicht Teil der stehenden Dichtfläche sind. Auf diese Weise wird das Modul-Gas besonders effektiv vornehmlich ausschließlich für die Erzeugung eines Gleitfilms für die Lagerung verwendet.

Zum Zweck der besonders zielgerichteten Verwendung des Modul-Gases, welches erfindungsgemäß gleichzeitig das Dichtgas ist, ist es sinnvoll, wenn der poröse Körper oder der Trägerkörper oder beide Bauteile gegenüber der stehenden Halterung eine Dichtung aufweisen gegen den Austritt des Modul-Gases zwischen den porösen Körper bzw. dem Trägerkörper und der stehenden Halterung. Diese Dichtung kann als O-Ring-Dichtung ausgebildet sein oder als eine sonstige quasi statisch einsetzbare Dichtung. Quasi statisch arbeitet diese Dichtung deswegen, weil in Folge der Rotordynamik und dynamischer Betriebsbedingungen eine Relativbewegung an dem Dichtungsbereich erfolgt. Hierbei ist es denkbar, dass diese Relativbewegungen durch eine Elastizität der Dichtung selbst zu einem wesentlichen Anteil aufgenommen werden.

Eine vorteilhafte Weiterbildung der Erfindung sieht vor, dass der poröse Körper und/oder der Trägerkörper gegen Verdrehen in Umfangsrichtung mittels einer Verdrehsicherung - beispielsweise mittels eines Stiftes oder einer Passfeder - an der statischen Halterung gesichert ist/sind.

Zweckmäßig ist der Trägerkörper, der direkt an dem porösen Körper anliegt mit einem Zuleitungskanal für das Modul-Gas in den porösen Körper hinein versehen.

Eine vorteilhafte Weiterbildung der Erfindung sieht vor, dass mehr als eine Zuleitung des Modul-Gases in den porösen Körper oder in verschiedene Umfangssegmente des porösen Körpers vorgesehen ist. Hierbei sollten mindestens zwei verschiedene Zuleitungen des Modul-Gases in den porösen Körper an unterschiedlichen Umfangspositionen vorgesehen sein. Zweckmäßig ist mindestens eine Zuleitung in der unteren Hälfte einer erfindungsgemäßen Dichtung oder eines als Radiallager ausgebildeten erfindungsgemäßen Gas-Lagers vorgesehen (hierbei ist die untere Hälfte durch die Schwerkraft des Rotors als solche definiert). Eine weitere Zuleitung sollte in der oberen Hälfte für das Modul-Gas in den porösen Körper vorgesehen sein. Diese Zuleitungen können mit einem unterschiedlichen Modul-Gas-Druck oder mit einer unterschiedlichen statischen Drossel oder mit einer unterschiedlich einstellbaren Drossel versehen sein. Diese Drosseln können vorteilhaft in Abhängigkeit von gegebenen Betriebsbedingungen mittels einer Regelung einstellbar ausgebildet sein. Beispielsweise kann der Volumenstrom an Modul-Gas an der oben befindlichen Zuleitungsstelle zu dem porösen Körper mittels Zustellens der Drossel reduziert sein gegenüber der unten befindlichen Zuleitungsstelle bei abnehmender Drehzahl bzw. bei niedrigen Drehzahlen, bei denen der aerodynamische Schmiereffekt ebenfalls abnehmend ist und ein größerer Bedarf an einem aerostatischen Schmierfilm an der unten befindlichen Umfangsposition vorliegt.

Außerdem ist mittels der Umfangspositions-spezifischen Druckbeaufschlagung eine Lageeinstellung des Rotors möglich.

Zweckmäßig ist der poröse Körper segmentiert. Ggf. kann der poröse Körper in einer vorteilhaften Weiterbildung Durchlässigkeitshindernisse in Umfangsrichtung an Segmentgrenzen aufweisen, so dass nicht nur die eigentliche Drosselwirkung des porösen Körpers die Druckdifferenzen zwischen verschiedenen Zuleitungsumfangspositionen verursacht, sondern auch diese Durchleitungssperren oder Hindernisse in Umfangsrichtung.

Zweckmäßig ist insbesondere bei einem radialen Dichtflächenverlauf oder einem erfindungsgemäßen Axiallager der poröse Körper als ununterbrochener Ring einstückig ausgebildet oder nahezu lückenlos zu einem in Umfangsrichtung ununterbrochenen Ring aus einzelnen Segmenten zusammengesetzt. Auf diese Weise wird nicht nur die Aufnahme einer axialen Lagerkraft gewährleistet, wie dies beispielsweise auch mittels in Umfangsrichtung nicht durchgehend ausgebildeter einzelner Lager-Pads möglich wäre sondern auch die erfindungsgemäße Dichtfunktion verwirklicht.

Im Folgenden ist die Erfindung anhand einiger speziellen Ausführungsbeispielen unter Bezugnahme auf Zeichnungen näher beschrieben. Es zeigen:
- Figur 1: einen Längsschnitt durch eine erste Ausbildung einer efindungsgemäßen Dichtung mit radiale Dichtfläche bzw. eines Axiallagers nach der Erfindung,
- Figur 2: einen Längsschnitt durch eine Detail der Ausbildung gemäß Figur 1 in schematischer Darstellung für eine andere Umfangsposition,
- Figur 3: eine schematische Darstellung eines Längsschnitts durch eine erste Ausbildung einer erfindungsgemäßen Dichtung mit radiale Dichtfläche bzw. eines Axiallagers nach der Erfindung einer zweiten Ausführungsvariante,
- Figur 4: einen Längsschnitt durch eine Ausführungsvariante der Erfindung eine Dichtung mit axialer Dichtfläche bzw. eines Radiallagers in schematischer Darstellung.

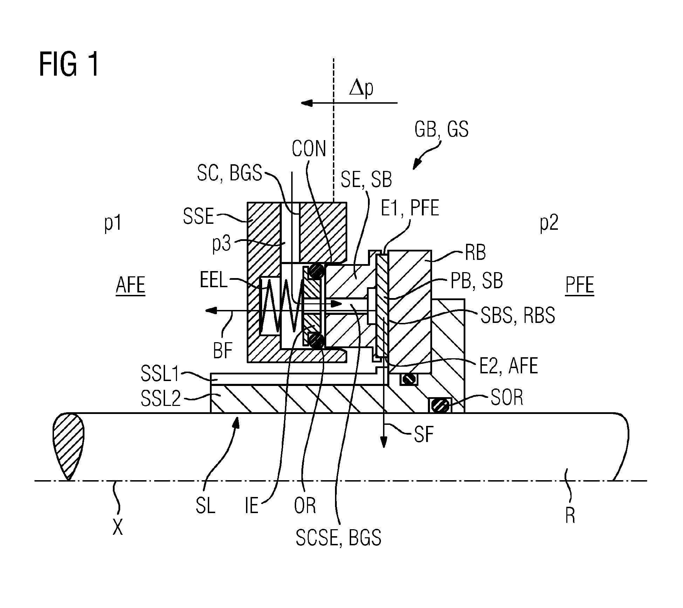

Der schematische Längsschnitt der Figur 1 durch eine erfindungsgemäße Gas-Dichtung GB bzw. Wellendichtung GS, welches gleichzeitig als Gas-Lager ausgebildet ist, zeigt eine Anordnung, welche sich entlang einer Achse X eines Rotors erstreckt.

Sämtliche Richtungsangaben, wie axial, radial, tangential oder in Umfangsrichtung beziehen sich auf die Achse X, wenn es nicht anders angegeben ist.

Die Gas-Dichtung GB befindet sich an einer Lagerstelle SL des Rotors R. Die Anordnung ist im Wesentlichen rotationssymmetrisch um die Achse X ausgebildet, wobei sich die Rotationssymmetrie im Wesentlichen auf einen stehenden Gleitkörper SB und einen rotierenden Gleitkörper RB bezieht, die einstückig in Umfangsrichtung ausgeführt sein können oder auch in Umfangsrichtung segmentiert sein können. Bei der segmentierten Ausführung ist der jeweilige Gleitkörper im Wesentlichen lückenlos in Umfangsrichtung segmentiert aneinandergesetzt. Wesentliche stehende Teile der Anordnung sind der stehende Gleitkörper SB, ein Zwischenelement IE angeordnet, zwischen dem stehenden Gleitkörper SB und einem elastischen Element EEL, welches den stehenden Gleitkörper SB in Richtung des rotierenden Gleitkörpers RB vorspannt, und eine stehende Halterung SSE, an der sich das elastische Element EEL abstützt und welches den stehenden Gleitkörper SB translatorisch führt für eine Bewegung in axialer Richtung. Die Gas-Dichtung GB der Figur 1 ist als Axiallager ausgeführt und weist gleichzeitig eine Dichtfunktion auf, um eine Druckdifferenz ΔP zwischen einer Prozessfluidseite PFE und einer Umgebungsfluidseite AFE im Betrieb aufrecht zu erhalten.

Rotierende Bauteile der Anordnung sind ein rotierender Gleit-körper RB, der mittels statischer Dichtungen RSS in einer zweiten Wellenhülse SSL2 gelagert ist, die auf die Welle des Rotors R aufgeschrumpft wird. Die axiale Position des rotierenden Gleitkörpers RB auf der zweiten Wellenhülse SSL2 wird mittels einer ersten Wellenhülse SSL1 gesichert. Die zweite Wellenhülse SSL2 ist mittels einer statischen O-Ring-Dichtung SOR zu der Welle des Rotors R gedichtet.

Der stehende Gleitkörper SB umfasst einen porösen Körper PB, der formschlüssig an einem Trägerkörper SE angeordnet ist und von diesem in einer räumlichen Position festgehalten wird. Der Trägerkörper SE ist mit einer Ausnehmung versehen, in die der poröse Körper PB teilweise eingelassen ist. Der poröse Körper PB weist eine stehende Dichtungsfläche SBS auf, die einer rotierenden Dichtungsfläche RBS an dem rotierenden Gleitkörper RB zugewandt ist.

Der stehende Haltering SSE weist eine Zuführleitung SC auf, mittels derer ein Modul-Gas BG durch einen Zuleitungskanal SCSE des Trägerkörpers SE zu dem porösen Körper PB geleitet wird. Der poröse Körper PB weist eine offene Porösität auf und wird von dem Modul-Gas BG in Richtung des rotierenden Gleitkörpers RB durchströmt. Unterhalb einer Abhebeldrehzal bildet sich auf diese Weise mittels des Modul-Gases ein aerostatischer Gasfilm aus, der sich oberhalb einer Abhebeldrehzahl zu einem aerodynamischen Gasfilm ändert. Jedenfalls arbeitet die Gasdichtung bzw. das Gas-Lager kontaktfrei, so dass kein Verschleiß an den Gleitflächen auftritt.

Die stehende Gleitfläche SBS weist eine Prozessfluidseite PFE an einer ersten Seite E1 auf, und wird von einer Umgebungsfluidseite AFE an einer zweiten Seite E2 begrenzt. Von der Prozessfluidseite PFE zur Umgebungsfluidseite AFE liegt eine Druckdifferenz ΔP an, die an dem porösen Körper PB in einer Dichtungskraft SF resultiert. Gleichzeitig resultiert die Flächenpressung zwischen dem rotierenden Gleitkörper RB und dem stehenden Gleitkörper SB in einer Lagerkraft BF. In den Ausführungsbeispielen wirken diese beiden Kräfte senkrecht zueinander und die resultierende Kraft wird in die stehende Halterung SSE eingeleitet. Die stehende Halterung SSE nimmt diese Kraft teilweise mittels des elastischen Elementes EEL auf, und teilweise mittels einer Führung CON zu translatorischen Bewegung des stehenden Gleitkörpers SB relativ zu der stehenden Halterung SSE. In der Zeichnung ist der Druck des Modul-Gases BG mit P3 bezeichnet, der Druck des Prozessfluids mit P2 und der Druck in der Umgebung mit P1. Bei den Ausführungsbeispielen gemäß der Figuren 1, 2, 3 und 4 ist der Druck P3 größer als der Druck P2 und größer als der Druck P1, wobei P2 größer als P1 ist, wenn es sich um einen Verdichter handelt. Das Modul-Gas BG kann Umgebungsluft sein oder bevorzugt in Inert-Gas, beispielsweise Stickstoff oder ein Edelgas. Der Vorteil bei der Verwendung von Umgebungsluft als Modul-Gas BG liegt darin, dass der Modul-Gas-Kreislauf bevorzugt offen gestaltet werden kann und eine nur geringe Aufbereitung der Luft ausreichend ist, das erfindungemäße Gas-Lager mit Modul-Gas BG zu versorgen und gleichzeitig keine Kühlung für das Modul-Gas BG notwendig ist. Bei einem geschlossenen Kreislauf für das Modul-Gas BG kann eine Kühlung zur Einhaltung eines gewünschten Temperaturniveaus an dem erfindungsgemäßen Gas-Lager GB zweckmäßig sein.

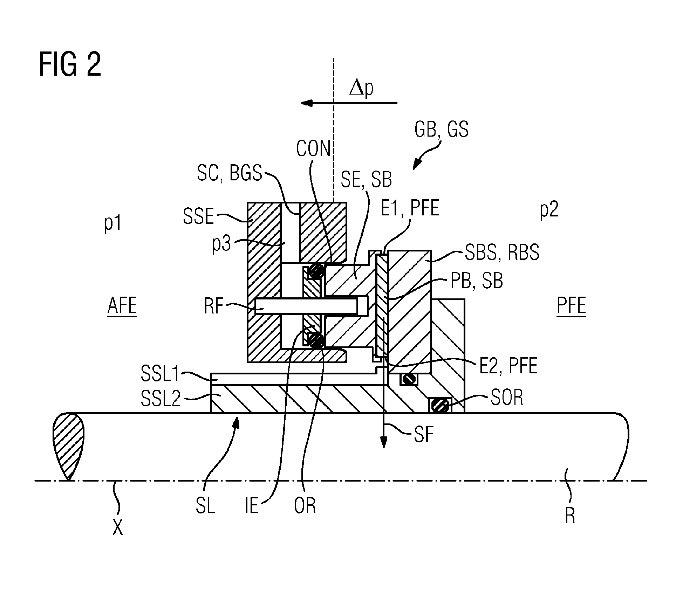

Die Figur 2 zeigt ein Detail der Ausbildung gemäß der Figur 1. Eine Verdrehsicherung RF in Form eines Stiftes sichert den stehenden Gleitkörper SB gegenüber der stehenden Halterung SSE gegen Verdrehen.

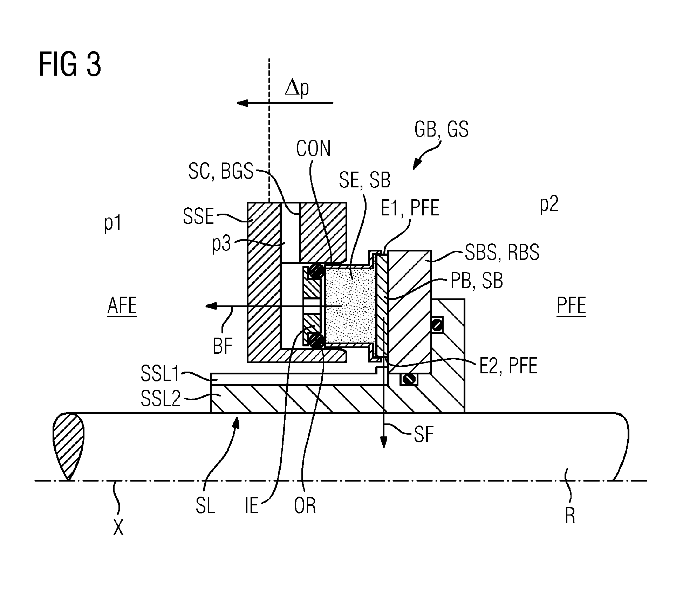

Figur 3 zeigt eine andere vorteilhafte Weiterbildung für den porösen Körper PB, der an Außenflächen, an denen ein Ausströmen des Modul-Gases BG unerwünscht ist - also die nicht Teil der stehenden Dichtungsfläche SBS sind - eine Versiegelung CO auf, welche die Durchlässigkeit für das Modul-Gas BG reduziert. Gleichzeitig kann diese Versiegelung CO den porösen Körper PB statisch stabilisieren, so dass diese beiden Funktionen des in den Figuren 1 und 2 dargestellten Trägerkörpers SE mittels der Versiegelung CO erfüllt werden.

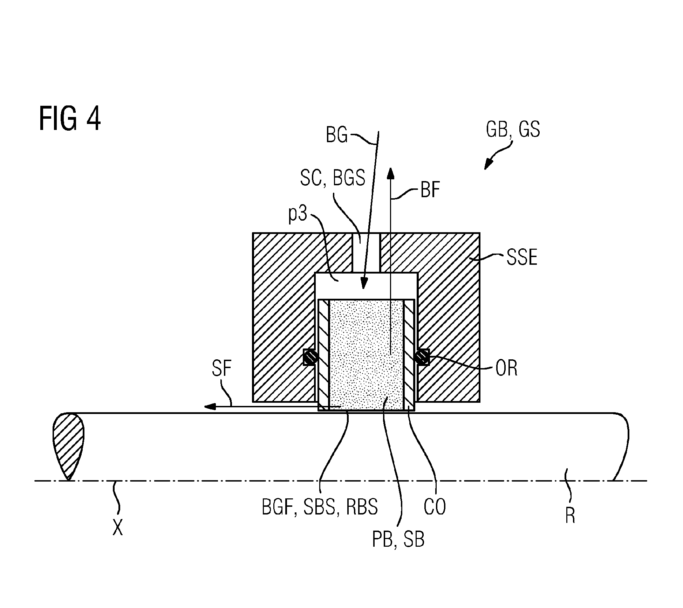

Figur 4 zeigt eine radiale Lagerung - vergleichbar in der Gesamtkonstruktion mit einer Schwimmringdichtung - bei der sich die stehende Dichtungsfläche SBS parallel zur Achse X des Rotors R erstreckt. Eine Versiegelung CO stabilisiert den porösen Körper PB und verhindert ein Austreten des Modul-Gases PB außerhalb der stehenden Dichtungsfläche SBS. Das Modul-Gas BG durchströmt die stehende Halterung SSE durch die Zuführleitung SC, wobei der Druck P3 des Modul-Gases BG gleichzeitig aufgrund des Druckverlusts in dem porösen Körper PB den porösen Körper PB in Richtung der rotierenden Dichtungsfläche RBS vorspannt. Die Dichtkraft SF wirkt hierbei axial und die Lagerkraft BF wirkt hierbei radial. Die Lagerkraft BF überträgt sich mittelbar durch das Modul-Gas BG auf die stehende Halterung SSE und O-Ringdichtungen OR zwischen dem stehenden Gleitkörper SB und der stehenden Halterung SSE übertragen die Dichtungskraft SF auf die stehende Halterung SSE.

## Patentansprüche

1. Gas-Dichtung (GB), die als Wellen-Dichtung (GS) ausgebildet ist, zum Zweck der Wellen-Dichtung eines sich entlang einer Achse (X) erstreckenden Rotors (R) an mindestens einer Dichtungsstelle (SL) umfassend
- mindestens eine stehende Dichtungsfläche (SBS),
- mindestens einen stehenden Gleitkörper (SB), der zumindest teilweise aus einem porösen Körper (PB) besteht, der aus einem Material von offener Porösität besteht,
- wobei die stehende Dichtungsfläche (SBS) an dem stehenden Gleitkörper (SB) derart ausgebildet ist, dass ein rotierender Gleitkörper (RB) relativ zu dem stehenden Gleitkörper (SB) bewegt werden kann,
- weiterhin umfassend mindestens eine Modul-Gaszuführung (BGS), welche derart ausgebildet ist, dass Modul-Gas (BG) in den stehenden Gleitkörper (SB) einblasbar ist und zumindest teilweise an der stehenden Dichtungsfläche (SBS) aus dem stehenden Gleitkörper (SB) austritt, derart, dass sich ein Modul-Gasfilm (BGF) über zumindest einen Teil der stehenden Dichtungsfläche (SBS) im Betrieb der Gas-Dichtung (GB) ausbildet,
- weiterhin umfassend eine stehende Halterung (SSE), welche derart ausgebildet ist, dass die stehende Halterung (SSE) den stehenden Gleitkörper (SB) in einer bestimmten Position hält,
welche derart ausgebildet ist, dass eine auf den stehenden Gleitkörper (SB) übertragene Lagerkraft (BF) auf die stehende Halterung (SSE) übertragen wird,
- wobei der stehende Gleitkörper (SB) eine Prozessfluidseite (PFE) aufweist, welche die stehende Dichtungsfläche (SBS) auf einer ersten Seite (E1) begrenzt,
- wobei der stehende Gleitkörper (SB) eine Umgebungsfluidseite (AFE) aufweist, welche die stehende Dichtungsfläche (SBS) auf einer zweiten Seite (E2) begrenzt,
- wobei der stehende Gleitkörper (SB) und die stehende Halterung (SSE) derart ausgebildet sind, dass eine Dichtungskraft (SF) aus einem Differenzdruck über die stehende Dichtungsfläche (SBS) zwischen der Prozessfluidseite (PFE) und der Umgebungsfluidseite (AFE) von dem stehenden Gleitkörper (SB) auf die stehende Halterung (SSE) übertragbar ist.

2. Gas-Dichtung (GB) nach Anspruch 1, wobei die Gas-Dichtung (GB) als gleichzeitiges Gas-Lager ausgebildet ist und die
- mindestens eine stehende Dichtungsfläche (SBS) auch als stehende Lagerfläche ausgebildet ist,
- wobei die stehende Dichtungsfläche (SBS) an dem stehenden Gleitkörper (SB) derart ausgebildet ist, dass der rotierende Gleitkörper (RB) eine Lagerkraft (BF) mittels der rotierenden Gleitfläche (RBS) an dem rotierenden Gleitkörper (RB) auf die stehende Gleitfläche (SBS) mittels des Modul-Gasfilms (BGF) übertragen kann,
- wobei der stehende Gleitkörper (SB) und die stehende Halterung (SSE) derart ausgebildet sind, dass die Lagerkraft (BF) über die stehende Dichtungsfläche (SBS) zwischen der Prozessfluidseite (PFE) und der Umgebungsfluidseite (AFE) von dem stehenden Gleitkörper (SB) auf die stehende Halterung (SSE) übertragbar ist.

3. Gas-Dichtung (GB) nach Anspruch 1 oder 2,
wobei die stehende Dichtungsfläche (SBS) sich parallel zur Achse (X) erstreckt.

4. Gas-Dichtung (GB) nach Anspruch 1 oder 2,
wobei die stehende Dichtungsfläche (SBS) sich schräg zur Achse (X) erstreckt.

5. Gas-Dichtung (GB) nach Anspruch 1 oder 2,
wobei die stehende Dichtungsfläche (SBS) sich senkrecht zur Achse (X) erstreckt.

6. Gas-Dichtung (GB) nach einem der vorhergehenden Ansprüche, wobei die stehende Halterung (SSE) mindestens eine Zuführleitung (SC) für das Modul-Gas (BG) in den stehenden Gleitkörper (SB) aufweist.

7. Gas-Dichtung (GB) nach einem der vorhergehenden Ansprüche, wobei zwischen der stehenden Halterung (SSE) und dem stehenden Gleitkörper (SB) ein elastisches Element (EEL) zur Vorspannung der stehenden Dichtungsfläche (SBS) in Richtung der rotierenden Dichtungsfläche (RBS) vorgesehen ist.

8. Gas-Dichtung (GB) nach einem der vorhergehenden Ansprüche, wobei der stehende Gleit-Körper (SB) einen Trägerkörper (SE) aufweist, der direkt an dem porösen Körper (PB) anliegt und Dichtungskräfte (SF) oder Lagerkräfte (BF) und Dichtungskräfte (SF) aus dem porösen Körper (PB) aufnimmt.

9. Gas-Dichtung (GB) nach einem der vorhergehenden Ansprüche, wobei der poröse Körper (PB) teilweise eine Versiegelung (CO) der äußeren Oberflächen, die nicht Teil der stehenden Dichtungsfläche (SBS) sind, aufweist, welche die Durchlässigkeit für das Modul-Gas (BG) reduziert.

10. Gas-Dichtung (GB) nach einem der vorhergehenden Ansprüche, wobei der poröse Körper (PB) oder der Trägerkörper (SE) gegenüber der stehenden Halterung (SSE) eine Dichtung (OR) aufweist gegen den Austritt des Modul-Gases (BG) zwischen dem porösen Körper (PB) bzw. dem Trägerkörper (SE) und der stehenden Halterung (SSE).

11. Gas-Dichtung (GB) nach einem der vorhergehenden Ansprüche,
wobei der poröse Körper (PB) und/oder der Trägerkörper (SE) gegen Verdrehen in Umfangsrichtung mittels einer Verdrehsicherung (RF) gesichert sind.

12. Gas-Dichtung (GB) nach mindestens dem vorhergehenden Anspruch 7,
wobei der Trägerkörper (SE) einen Zuleitungskanal (SCSE) für das Modul-Gas (BG) in den porösen Körper (PB) aufweist.

13. Anordnung mit einer als Wellendichtung (GS) ausgebildeten Gas-Dichtung (GB) nach einem der vorhergehenden Ansprüche, wobei die Anordnung den rotierender Gleitkörper (RB) umfasst, der relativ zu dem stehenden Gleitkörper (SB) unter Ausbildung des Modul-Gasfilms (BGF) über zumindest einen Teil der stehenden Dichtungsfläche (SBS) im Betrieb der Dichtung, bewegt werden kann und
welcher rotierende Gleitkörper (RB) die Dichtungskraft (SF) mittels der rotierenden Gleitfläche (RBS) an dem rotierenden Gleitkörper (RB) im Betrieb auf die stehende Gleitfläche (SBS) überträgt.

14. Turbomaschine mit einer Anordnung nach dem vorhergehenden Anspruch 12,
wobei die Turbomaschine einen Rotor (R) umfasst und der rotierender Gleitkörper (RB) an dem Rotor derart befestigt ist, dass eine Dichtungskraft (SF) aus einem Differenzdruck über die rotierende Dichtungsfläche (RBS) zwischen der Prozessfluidseite (PFE) und der Umgebungsfluidseite (AFE) von dem rotierenden Gleitkörper (RB) mittels einer Befestigung an dem Rotor (R) auf den Rotor (R) übertragbar ist.
